# EUROPEAN PATENT SPECIFICATION

(11) **EP 2 335 490 B1**
(45) Date of publication and mention of the grant of the patent: **29.05.2013**
(21) Application number: 09817899.9
(22) Date of filing: 02.10.2009
(51) Int. Cl.: A23F 5/10, A23F 5/14

(54) **ROASTED COFFEE BEANS AND A METHOD OF STORING ROASTED COFFEE BEANS**
GERÖSTETE KAFFEEBOHNEN UND VERFAHREN ZUR LAGERUNG GERÖSTETER KAFFEEBOHNEN
GRAINS DE CAFÉ TORRÉFIÉS ET PROCÉDÉ DE STOCKAGE DE GRAINS DE CAFÉ TORRÉFIÉS

(30) Priority: 02.10.2008 JP 2008257179
(43) Date of publication of application: 22.06.2011
(73) Proprietor: Suntory Beverage & Food Limited, Minatu-ku Tokyo 135-8631 (JP)
(72) Inventor: ONISHI, Tatsuji, Kawasaki-shi Kanagawa 211-0067 (JP); FUJIWARA, Masaru, Kawasaki-shi Kanagawa 211-0067 (JP); YOSHIMOTO, Seiko, Kawasaki-shi Kanagawa 211-0067 (JP); MIZUTA, Mami, Kawasaki-shi Kanagawa 211-0067 (JP)
(74) Representative: Vossius & Partner
(86) International application number: PCT/JP2009/067249
(87) International publication number: WO 2010/038867

(56) References cited:
- EP-A1- 1 880 614
- EP-A1- 1 886 576
- WO-A1-2005/029969
- CZERNY M ET AL: "POTENT ODORANTS OF RAW ARABICA COFFEE. THEIR CHANGES DURING ROASTING", JOURNAL OF AGRICULTURAL AND FOOD CHEMISTRY, AMERICAN CHEMICAL SOCIETY, US, vol. 48, 1 January 2000 (2000-01-01), pages 868-872, XP002431388, ISSN: 0021-8561, DOI: 10.1021/JF990609N
- Anonymous: "Names and Identifiers", www.chemspider.com, 1 January 2012 (2012-01-01), pages 1-1, XP55018608, Retrieved from the Internet: URL:http://www.chemspider.com/Chemical-Str ucture.7657.html?rid=387ea09a-8cdc-4824-a8 62-87e1c58cddb5 [retrieved on 2012-02-07]
- GERHARD, F. ET AL.: 'Differences in chemical composition of electronically sorted green coffee beans.' COLLOQUE SCIENTIFIQUE INTERNATIONAL SUR LE CAFE vol. 18TH, 1999, pages 35 - 42, XP008137466

## Description

### TECHNICAL FIELD

The present invention relates to roasted coffee beans with improved keeping quality that can be stored in the air over a prolonged period. The present invention also relates to a method of storing roasted coffee beans that is so adapted to be capable of prolonged storage of roasted coffee beans in the air.

### BACKGROUND ART

Coffee cherries harvested from the coffee plant consist of the outer skin (outermost part), pulp, mucilage (pectin layer), endocarp (hull or parchment), silver skin, endosperm, and embryo. Such coffee cherries are stripped of the outer skin, pulp, endocarp, etc. by either dry polishing (also called non-wash polishing) or wet polishing (also called wash polishing) to obtain green coffee beans (the combination of endosperm and embryo). To make regular coffee, green coffee beans are roasted with a roaster and the resulting roasted coffee beans are ground to prepare powdered coffee, over which boiling water is poured to brew a coffee extract which is ready to be drunk. Two important characteristics in the quality of coffee are taste and aroma and since roasting greatly affects these characteristics, various ideas have heretofore been put forward to improve the way in which roasting is performed and controlled.

The trouble with roasted coffee beans is that the scattering of aroma and oxidation are considerable or and if roasted coffee beans of desired quality are not consumed immediately but stored for a while, their aroma becomes weak and an off-odor called "oxidation smell" (the smell of stale beans) will develop to degrade the quality of coffee. In particular, the powdered coffee prepared by grinding roasted coffee beans with a coffee mill or the like has an increased surface area to be exposed, so that aerial oxidation will cause more marked deterioration in flavor. Under these circumstances, distributors of roasted coffee beans or their grinds generally take various measures to minimize the deterioration in the quality of roasted coffee beans and they include wrapping them with a highly hermetic packaging material so that they are sealed (evacuated) to be prevented from contact with the air (or oxygen), or replacing the surrounding atmosphere with nitrogen or other gases. However, in spite of these measures, it is difficult for consumers who have purchased roasted coffee beans or their grinds to use them up as soon as they have opened the packages, and particularly at home, it is commonplace to consume roasted coffee beans or their grinds in several divided portions, with the inevitable deterioration of their flavor in the process.

Under the circumstances, methods have been developed to maintain the quality of roasted coffee beans over a prolonged period. They include a method in which coffee beans are coated with saccharides to ensure that they can be stored for a prolonged period with a smaller change in flavor over time and with suppressed oxidative deterioration (Patent Document 1); and a method in which a tocopherol compound and/or a derivative thereof is added to roasted coffee beans so that their flavor is stabilized (Patent Document ²).

It is known from the prior art that roasted coffee contains ethyl isovalerate (ethyl 3-methylbutyrate) (Document 3) and that flavour of coffee is improved by fermenting green coffee beans (Patent Documents 4, 5, and 6).

### CITATION LIST

Patent Document 1: JP 2001-112415 A
Patent Document 2: JP 1994-2027 B
Document 3: M. Czerny and W. Grosch (2000). Potent Odorants of Raw Arabica Coffee. Their Changes during Roasting. J. Agric. Food chem.
Patent Document 4: EP 1 880 614
Patent Document 5: EP 1 886 576
Patent Document 6: US 2007/0190207

### SUMMARY OF INVENTION

### TECHNICAL PROBLEMS

As described above, roasted coffee beans will undergo deterioration in their quality during prolonged exposure to the air, and the various conventional measures taken during storage of coffee beans have not proved completely satisfactory. The methods disclosed in Patent Documents 1 and 2 involve a complicated process since the step of spraying roasted coffee beans with a solution of an additive (e.g., saccharides or tocopherol) is required, and during this step, the scattering of the aroma of the roasted coffee beans and oxidation are unavoidable and, what is more, the taste of the additive will affect the taste of the final coffee product; thus, those methods are not always practically feasible.

An object, therefore, of the present invention is to provide roasted coffee beans that can be stored in the air (a natural environment hostile to coffee beans) without experiencing damage to the inherent taste and aroma of coffee and with the change in flavor over time and the oxidative deterioration being suppressed to ensure that they retain a satisfactory flavor. Another object of the present invention is to provide a method of storing roasted coffee beans in the air, by which the change in flavor that occurs over time, particularly in the air, and the oxidative deterioration can both be suppressed.

### SOLUTION TO PROBLEMS

To solve the aforementioned problems, the present inventors made intensive studies and found that a very small amount of ethyl isovalerate had an action for preventing a decrease in the aroma of roasted coffee beans which are liable to change over time, and for masking the oxidation smell. As the result of a further study, they found the following: ethyl isovalerate is a component that is produced during the fermentation of coffee beans and which is sufficiently heat-resistant to be maintained in the coffee beans even after they are roasted; the aroma of roasted coffee beans containing the ethyl isovalerate is capable of maintaining the characteristic aroma of coffee that develops upon roasting; to be more specific, it was found that the aroma component of fermented coffee beans had an action for preventing a decrease in the aroma of roasted coffee beans that are liable to change over time and for masking the oxidation smell. The present inventors then confirmed that roasted coffee beans which are at least partly blended with roasted coffee beans containing ethyl isovalerate or roasted coffee beans subjected to fermentation are suppressed in terms of the change in flavor with time and the deterioration due to oxidation, even if they are accommodated in a container in such a manner that they are in contact with the air; the present invention has been accomplished on the basis of these findings.

To be more specific, the present invention relates to the following.
1. Roasted coffee beans in a container that contain ethyl isovalerate wherein the proportion of ethyl isovalerate relative to the total quantity of the coffee scancs is 10ppb or more, and 200ppb or less.
2. Roasted coffee beans in a container that comprise roasted coffee beans containing ethyl isovaleratea wherein the proportion of ethyl isovalerate relative to the total quantity of the coffee scancs is 10ppb or more, and 200ppb or less.
3. The roasted coffee beans in a container as recited in 1 or 2, wherein the container accommodates the roasted coffee beans as they are in contact with the air.
4. The roasted coffee beans in a container as recited in any one of 1 to 3, wherein the proportion of ethyl isovalerate is 10 ppb or more relative to the total quantity of the coffee beans.
5. The roasted coffee beans in a container as recited in any one of 1 to 4, wherein the roasted coffee beans containing ethyl isovalerate are fermented, roasted coffee beans that have been subjected to fermentation and roasting.
6. The roasted coffee beans in a container as recited in 5, wherein the proportion of the fermented, roasted coffee beans is 1 wt% or more of the total quantity of the coffee beans.
7. The roasted coffee beans in a container as recited in 5 or 6, wherein the proportion of the fermented, roasted coffee beans is 50 wt% or less of the total quantity of the coffee beans.
8. The roasted coffee beans in a container as recited in any one of 5 to 7, wherein the fermented, roasted coffee beans contain 5 ppm or more of ethyl acetate and/or 500 ppm or more of ethanol.
9. A process for producing roasted coffee beans including the step of treating roasted coffee beans such that they comprise roasted coffee beans containing ethyl isovalerate wherein the proportion of ethyl isovalerate relative to the total quantity of the coffee scans is 10ppb or more, and 200ppb or less..
10. A method of storing roasted coffee beans in the air, including the step of treating roasted coffee beans such that they comprise roasted coffee beans containing ethyl isovalerate wherein the proportion of ethyl isovalerate relative to the total quantity of the coffee scancs is 10ppb or more, and 200ppb or less.

### ADVANTAGEOUS EFFECTS OF INVENTION

According to the present invention, roasted coffee beans that need be stored for a prolonged period may be treated in such a way that they incorporate ethyl isovalerate; for example, this can be done by blending them with coffee beans containing ethyl isovalerate (for example, fermented coffee beans) to be at least a part of the beans; the thus treated roasted coffee beans can be stored in the air without suffering degradation of their quality. Hence, there is no need to take special measures such as storing ground coffee beans in a sealed or vacuum state to prevent contact with the air (or oxygen), or purging with nitrogen or other gases. Even if pouched coffee beans (or their grinds) as distributed in a vacuum or another state are opened at home and consumed in several divided portions, their aroma and flavor will not be impaired by the air, but the preferred quality of the roasted coffee beans will be maintained to ensure that coffee having the desirable aroma can be drunk at any time over a prolonged period.

The roasted coffee beans containing fermented, roasted coffee beans that are obtained by the present invention are not only capable of storage over a prolonged period but they also present an advantageous effect in terms of the quality of a coffee extract brewed from the roasted coffee beans-the extract, due to the addition of the fermented, roasted coffee beans, has a blooming top note and body (richness) while being immune to changes with time (e.g., scattering of aroma and oxidation).

Ground coffee beans obtained by grinding roasted coffee beans in the air undergo scattering of aroma during grinding to a considerable extent which is typically reported to range from 40 to 50%; however, the roasted coffee beans of the present invention have the advantage that even if they are ground in the air, their aroma will not be readily scattered, making it possible to obtain a powdered coffee having rich aroma.

### DESCRIPTION OF EMBODIMENTS

### Roasted Coffee Beans

"Roasted coffee beans" as referred to in the present invention are those obtained by subjecting green coffee beans to a heat treatment called "roasting." Upon roasting, the components in the green coffee beans undergo chemical changes, causing the inherent characteristics such as aroma, taste and color of coffee to develop. Unless otherwise noted, the "roasted coffee beans" as used in the present invention shall cover, for the sake of convenience, grinds of roasted coffee beans (which may sometimes be designated "powdered coffee").

In the present invention, the varieties of coffee beans are not particularly limited. Examples include Brazilian, Columbian, Tanzanian, Mocha, Kilimanjaro, Mandheling, Blue Mountain, etc. Coffee species include Arabica, Robusta, Liberica, etc. Coffee beans may be of a single species or variety; alternatively, two or more species or varieties may be blended.

The roasting method and conditions are not particularly limited and a suitable heat source such as direct fire, hot air, semi-hot air, charcoal fire, far-infrared radiation, microwaves, or superheated steam may be applied to suitable equipment such as a horizontal drum, vertical drum, vertical rotating bowl, fluidized bed or a pressurized vessel so that coffee beans are roasted to a suitable level (i.e., light, cinnamon, medium, high, city, full city, French or Italian) that meets the desired object depending on the species or variety of the coffee beans. From the viewpoint of recovering the soluble solids in high yield during extracting, the open horizontal drum, the sealed horizontal drum or the vertical rotating bowl is preferred, with the vertical rotating bowl being more preferred. From the viewpoint of suppressing the oxidation smell, it is preferred to roast the coffee beans in such a manner that an L value, as measured with a color-difference meter and used as an index for the roast level, reads about 10-30, preferably about 10-25, more preferably about 15-25. In coffee beans roasted to this roast level, the effect of ethyl isovalerate for suppressing (masking) the oxidation smell is markedly exhibited. The roast level may be measured by the following procedure: 50% of the roasted coffee beans under test are ground to particles sized 0.8-1.2 mm; the amounts of particles sized 0.5 mm and less and particles sized 2 mm and more are each adjusted to 5% and less; chafe is removed as necessary; the ground beans are charged into a cell, tapped sufficiently, and then subjected to measurement with a spectroscopic colorimeter. A spectroscopic colorimeter that may be used is SE-2000 produced by NIPPON DENSHOKU INDUSTRIES CO., LTD.

From the viewpoint of ensuring a good flavor, the roasted coffee beans are desirably cooled to a temperature between 0 and 100°C, preferably between 10 and 60°C within 30 minutes after the roasting.

### Ethyl Isovalerate

The present invention is characterized by incorporating ethyl isovalerate in the roasted coffee beans described above. Ethyl isovalerate (also designated as butanoic acid 3-methyl-ethyl ester, butyric acid 3-methyl-ethyl ester, or isovaleric acid ethyl ester) is a compound represented by the following formula (I): 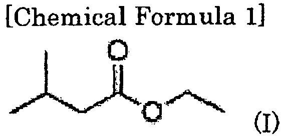 and it is found in fruits such as pineapple, strawberry, and citrus. For the roasted coffee beans of the present invention, it is possible to use an ethyl isovalerate containing plant extract obtained from plants containing the substance by any known extraction method; the plant extract may be added as such or, alternatively, the ethyl isovalerate in the extract may be concentrated or purified and the resulting concentrate or pure product may then be added to the roasted coffee beans. If the fruit extract is directly added to the roasted coffee beans, the flavor of the fruit may potentially affect a coffee beverage that is prepared by brewing the roasted coffee beans with boiling water or the like; hence, rather than being used as a fruit extract, ethyl isovalerate is preferably used in the form of a concentrate or purified product or as a synthetic product.

The present inventors also confirmed by investigation that the coffee beans subjected to fermentation contained ethyl isovalerate. Since none of the unfermented, green coffee beans, the coffee beans obtained by roasting them, and the commercial coffee beverages were found to contain ethyl isovalerate, it may be concluded that ethyl isovalerate is a compound that was specifically produced in coffee beans by subjecting them to fermentation. The coffee beans subjected to fermentation (hereinafter referred to as "fermented coffee beans") are obtained by treating harvested coffee cherries with a certain fermentation-based process that utilizes the function of a microorganism, and they are coffee beans containing ethyl isovalerate at a concentration that can be detected by the following method.

### (Method of Detecting Ethyl Isovalerate in Coffee Beans)

Green coffee beans (5 g) were first ground to a medium grind, to which distilled water (50 mL) was added for steam distillation; the resulting distillate (100 mL) was put into a separating funnel and after adding sodium chloride (25 g) and diethyl ether (50 mL), the separating funnel was shaken for 20 minutes. The diethyl ether layer was recovered and the remaining aqueous layer was put into a separating funnel; after adding diethyl ether (50 mL) again, the separating funnel was shaken for 20 minutes and the diethyl ether layer was recovered. The diethyl ether layer obtained in a total of 100 mL was returned to the separating funnel; after rinsing the separating funnel with distilled water (50 mL), the diethyl ether layer was recovered and sodium sulfate (30 g) was added; the mixture was dehydrated and concentrated to 1 mL by the KD (Kuderna-Danish) concentration method; the concentrate was introduced into GC-MS for detecting ethyl isovalerate. The GC-MS conditions were as follows.

### <GC-MS conditions>

- Apparatus: 6890N (GC) + 5973inert (MS), product of Agilent
- Column: MACH HP-INNOWAX (10 m*0.20 mm*0.20 µm), product of GERSTEL
- Column temperature: 40°C (3 min) ~ 50°C/min ~ 250°C (10 min)
- Carrier gas: He
- Injection port temperature: 250°C
- Transfer lines 250°C
- Ionization source temperature: 230°C
- Scan parameter: m/z = 35 ~ 350
- SIM parameter : m/z = 70, 88, 102

For example, fermented coffee beans may be obtained by either one of the following methods:
1) Coffee cherries as harvested are contacted with a microorganism to ferment and then husked (polished) by either the wash or non-wash method.
2) Coffee cherries as harvested are dried either in the sun or by mechanical means and then contacted with a microorganism to ferment and husked (polished) by either the wash or non-wash method.
3) Coffee cherries as harvested are dried in the sun while they are subjected to microbial fermentation and then husked (polished).
4) Coffee cherries as harvested are stripped of the pulp in a depulper and charged into a water tank where they are stripped of the mucilage adhering to the parchment while at the same time they are subjected to microbial fermentation in the presence of added nutritive substances that can be metabolized by the microorganism used and they are then dried either in the sun or by mechanical means and husked.

Contact with a microorganism may be effected either artificially by adding it, or by making use of a microorganism attached to coffee cherries at their surfaces or the like. In the case of artificial contact with a microorganism, exemplary microorganisms that can be used include yeasts such as yeasts for wine fermentation (e.g., yeasts of strain Lalvin L2323 (Setin Co., Ltd.) and CK S102 strain (BioSpringer), both belonging to the species *Cerevisiae* in the genus *Saccharomyces,* and of the species *bayanus* in the genus *Saccharomyces*)*,* yeasts for beer fermentation, and baker's yeast; lactic acid bacteria of the genera *Lactobacillus, Pediococcus,* and *Oenococcus;* aspergilli such as ones used to make *sake, shouchu* (Japanese distilled liquor), and *miso* (Japanese fermented soybean paste); and deuteromycetes, or microorganisms belonging to the genus *Geotrichum.* Examples of microorganisms belonging to the genus *Geotrichum* include *Geotrichum candidum, Geotrichum rectangulatum, Geotrichum klebahnii,* and *Geotrichum sp.,* with *Geotrichum sp.* SAM2421 (International Deposit Number: FERM BP-10300) or its variants being particularly advantageous. These microorganisms belonging to the genus *Geotrichum* can be obtained as isolates from coffee cherries.

Contact with a microorganism can be effected either by spraying or dusting coffee cherries with the microorganism or by immersing coffee cherries in a suspension of the microorganism. The fermentation conditions may be chosen as appropriate for the particular microorganism to be used.

As mentioned above, microorganisms belonging to the genus *Geotrichum* or *Saccharomyces* can be found on coffee cherries, so instead of performing artificial microbial fermentation as by contact with a microorganism, the behavior of such microorganisms belonging to the genus *Geotrichum* or *Saccharomyces* may simply be controlled for fermentation to produce fermented coffee beans.

The regions of coffee cherry production are largely divided into two groups, one being regions such as Yemen and Brazil where the harvest season is dry and there is no need to worry about rain, and the other being regions such as Latin America, Africa and Asia where high humidity prolongs the time to dry in the sun. In the first group of regions including Yemen and Brazil, fermented coffee beans can be produced artificially by the above-described methods 1), 2) or 4), preferably method 1) or 2); in the second group of regions including Latin America, Africa and Asia, fermented coffee beans can be produced not only by the artificial means but also by the above-described method 3), where coffee cherries as harvested are dried in the sun while they are fermented with the aid of the microorganism attached to the surfaces of the cherries. Note that to perform "fermentation" in the sense of the term used in the present invention, it is important to control the growth conditions for the above-mentioned microorganisms in such a way as to prevent "rotting", namely to ensure that no malodor as from sulfides or ammonia will develop. In the case of method 3), to ensure that no rotting will occur, it is important that the coffee cherries to be dried in the sun (i.e., for microbial fermentation) should be protected against rotting by taking a suitable means such as piling up the coffee cherries in a thickness not exceeding a certain level (say, 10 cm or less), laying them out in a thin layer (say, 5 cm or less) immediately after the start of drying and gradually increasing its thickness (say, between 5 and 10 cm) as their water content decreases, or regularly turning the piles of coffee cherries (say, once an hour).

The roasted coffee beans of the present invention may be treated such that they comprise, at least as a part of them, the fermented coffee beans described above, preferably the coffee beans subjected to fermentation and roasting (which are hereinafter referred to as "fermented, roasted coffee beans"), whereby ethyl isovalerate effective for providing improved keeping quality which is the principal objective of the present invention can be incorporated. The timing of this treatment is not limited and two methods may be exemplified; in one method, fermented green coffee beans are mixed with the unfermented green coffee beans that are to be stored and the mixture is then roasted (this may be called pre-blending); and in the other method, fermented, roasted coffee beans are mixed with other roasted coffee beans (this may be called after-blending). Whether the pre-blending or after-blending method is performed, the fermented coffee beans are desirably roasted to give an L value of about 16-30, preferably about 18-22. In roasting that gives an L value less than 16, the resulting cyclic dipeptides and other substances might impair the effectiveness of ethyl isovalerate which is the effective component of the present invention.

The characteristic aroma of ethyl isovalerate or coffee beans (preferably fermented, roasted coffee beans) containing ethyl isovalerate is useful in masking the oxidation smell. Hence, the roasted coffee beans of the present invention which are at least partly mixed with the coffee beans containing ethyl isovalerate can be stored in the air, suffering only a small change in the aroma of coffee and maintaining the preferable coffee aroma. The content of ethyl isovalerate is such that when the roasted coffee beans to be stored are subjected to measurement by the above-described GC-MS for detecting ethyl isovalerate, the concentration of ethyl isovalerate relative to the total quantity of roasted coffee beans (which, in the case where ethyl isovalerate is directly added to the roasted coffee beans to be stored, refers to the total quantity of those roasted coffee beans, and in the case where the roasted coffee beans containing ethyl isovalerate are incorporated in the roasted coffee beans to be stored, refers to the sum of the two types of roasted coffee beans) is at least 10 ppb, preferably at least 30 ppb, more preferably at least 50 ppb. Unless it is incorporated in an amount of at least 10 ppb, ethyl isovalerate is not adequately effective in controlling a possible deterioration in the quality of the roasted coffee beans during storage in the air. As the content of ethyl isovalerate increases, the keeping quality of the roasted coffee beans is improved but, on the other hand, the characteristic smell of ethyl isovalerate which is reminiscent of fruits might interfere with the aroma of coffee; hence, the upper limit of the content of ethyl isovalerate is 200 ppb, preferably 160 ppb, more preferably 100 ppb.

If ethyl isovalerate is to be incorporated in the form of fermented, roasted coffee beans, the latter may be added in such an amount that ethyl isovalerate is incorporated in the proportions indicated above; typically, the proportion of the fermented, roasted coffee beans to be incorporated is at least 1 wt%, preferably at least 5 wt%, of the roasted coffee beans in their entirety (the sum of the weight of the roasted coffee beans to be stored and that of the fermented, roasted coffee beans). There is substantially no upper limit for the proportion of the fermented, roasted coffee beans to be incorporated, and it may be adjusted to 100 wt% in order to provide roasted coffee beans having very good keeping quality; however, from the viewpoint of flavor, they are preferably blended with unfermented, roasted coffee beans in proportions that are preferably 50 wt% or less, more preferably 30 wt% or less.

Compared to ethyl isovalerate as a pure product (which may be a synthetic product), the use of the fermented, roasted coffee beans containing ethyl isovalerate is effective not only in masking the oxidation smell of the roasted coffee beans to be stored but they are also capable of enhancing the flavor of the beans. The mechanism for this phenomenon is not known but ethyl acetate and/or ethanol that are components in the characteristic aroma of the fermented coffee beans would contribute a lot. Hence, the fermented, roasted coffee beans have to be controlled in terms of fermentation and roasting so that they will contain specified amounts of ethyl acetate and ethanol. Specifically, the ethyl acetate content is at least 5 ppm, preferably at least 10 ppm, more preferably at least 20 ppm, even more preferably at least 30 ppm, and most preferably at least 40 ppm; the ethanol content is at least 500 ppm, preferably at least 600 ppm, and more preferably at least 1000 ppm.

The values of ethyl acetate and ethanol contents noted above are those obtained by making a compositional analysis of the gas in the headspace of a gas chromatographic (GC) sample tube charged with fermented, roasted whole (yet to be ground) coffee beans. The conditions for GC analysis are as follows.

### (GC analysis conditions)

- Apparatus: Agilent 7694 HeadspaceSampler (product of Agilent Technologies) Agilent 6890 GC System (product of Agilent Technologies)
- Column: HP-INNOWAX (60 mm x 0.25 mm i.d. x 0.25 µm in film thickness)
- Temperature: held at 40°C for 4 min, raised at 3°C/min up to 220°C, and held at 230°C for 30 min
- Detectors: MSD, FID

Ethyl acetate and ethanol are components that are barely detectable in unfermented green coffee beans and unfermented, roasted coffee beans. These components have higher vapor pressures than water and are easy to evaporate, but in the case where they are allowed to occur in green coffee beans as the result of fermentation, they are less likely to evaporate and much of them will remain in the coffee beans even after roasting at 200-300°C. In view of these observations, it may be said that ethyl acetate and ethanol are compounds that are specifically produced and incorporated in coffee beans upon fermentation. The ethyl acetate and ethanol that remain in the fermented coffee beans also exhibit effectiveness in suppressing the scattering of major aroma components in the roasted coffee beans, such as furfuryl alcohol, 5-methylfurfural, 2,5-dimethylpyrazine, 2,6-dimethylpyrazine, ethylpyrazine, phenol, and 2-acetylpyrrole. In addition, when a coffee extract is obtained from the fermented, roasted coffee beans, ethyl acetate dissolves out in the extract which then exhibits the inherent volatility of ethyl acetate, creating a blooming top note. In other words, the fermented, roasted coffee beans enhance the aroma of coffee in the coffee extract while, at the same time, they exhibit effectiveness in improving the quality of the coffee extract by imparting body (richness) to the taste.

### Roasted Coffee Beans in Container

In the present invention, the roasted coffee beans described above that contain ethyl isovalerate or roasted coffee beans containing said roasted coffee beans (preferably fermented, roasted coffee beans) are adapted to be in such a mode that they are accommodated in a container, preferably in such a state that said roasted coffee beans are in contact with the air. An advantageous characteristic of this mode is that the aroma of coffee will suffer only a small degree of scattering and the occurrence of oxidation is also limited during prolonged storage, not only under favorable conditions but also in the air which is a hostile condition against the roasted coffee beans.

The term "the air" as used herein means oxygen-containing air, and it specifically refers to air that contains oxygen in a sufficient amount to cause oxidative degradation of the roasted coffee beans (say, at least 10 v/v%, preferably at least 15 v/v%, of the total volume of the air), and the "storage in the air" refers to such a state that the roasted coffee beans are stored in an oxygen-containing air atmosphere for a period of about one day to about six months, preferably about one day to about three months, more preferably about one day to about one month.

The "roasted coffee beans accommodated in a container in such a state that they are in contact with the air" refers to those coffee beans that have been roasted with a roaster or by retailers of coffee beans or at cafés or at home and which are not subsequently processed by any means such as purging with nitrogen or evacuation but are simply placed in containers (e.g., pouch, can, and bin) that allow them to be stored in contact with the air. Roasted coffee beans that are sold on the market after a certain treatment such as purging with nitrogen or evacuation and which are opened at home and transferred into storage containers (e.g., pouch, can, and bin) that make contact with the air shall also be encompassed by the "roasted coffee beans accommodated in a container in such a state that they are in contact with the air." It should be noted that the container to be used in the present invention is not limited to a sealed container.

Roasted coffee beans in a container are either yet-to-be ground beans or powdered coffee which is prepared by grinding roasted coffee beans into granules or fine particles. The process for producing powdered coffee is not particularly limited and known grinding means such as coffee mills, grinders, mortars, and grindstones may be employed. The production of powdered coffee involves problems such as the scattering of most of the coffee aroma during grinding and accelerated deterioration of quality due to aerial oxidation that results from the increase in surface area upon grinding; the roasted coffee beans of the present invention that contain the fermented, roasted coffee beans are less likely to undergo these instances of quality deterioration during and after grinding. As already noted, mixing with the fermented, roasted coffee beans may be effected on any timing, but in the case of powdered coffee, from the viewpoint of suppressing deterioration in quality during grinding, mixing is preferably done before grinding. The powdered coffee thus obtained is suppressed in the scattering of aroma during and after grinding and it is less likely to undergo oxidation; hence, the powdered coffee according to the present invention has a heretofore-unattainable rich aroma.

### EXAMPLES

On the following pages, the present invention will be explained in greater detail by Examples which are by no means intended to limit the present invention.

### Example 1. Production of Fermented Coffee Beans (1)

Fermented coffee beans were produced by the following steps:
1) a vapor treatment step for treating coffee cherries with vapor at 90-110°C for 15-30 seconds;
2) a step for cooling to 30-40°C;
3) a pH adjustment step for adding adipic acid or lactic acid in an amount of 0.05-0.5 wt% on the basis of the weight of the coffee cherries, thereby adjusting the pH of the outer skins of the coffee cherries to between 3 and 4;
4) a microorganism attaching step for attaching a microorganism for fermentation either simultaneously with or subsequent to the pH adjustment step;
5) a culture step at 30-40°C for 48-72 hours;
6) a drying step for drying the cultured coffee cherries; and
7) a separating/refining step for separating the coffee pulp from the coffee seeds to obtain fermented coffee beans.

To be more specific, 100 kg of fresh coffee cherries (of Brazilian Arabica) were provided and carried on a conveyor capable of speed adjustment and equipped with a tunnel-type vapor introducing section, thereby performing the above step 1) at a temperature of 100°C for a period of 20 seconds. Subsequently, cold air was supplied to quench the coffee cherries to 40°C (step 2)). Fifty grams of dried cells of strain Lalvin EC1118 (*Saccharomyces bayanus;* yeast for wine fermentation) were dissolved in 200 g of water to prepare a yeast solution, which was added together with 100 g of adipic acid to 100 kg of the coffee cherries so that the yeast would be evenly attached to the coffee cherries at a concentration of 1.0 x 10⁶⁻⁷ cells per coffee cherry (steps 3) and 4)). The coffee cherries were left to stand at 35°C for 72 hours to ferment (step 5)) and thereafter dried with a dryer (step 6)), stripped of the pulp with a husker to obtain fermented coffee beans (green beans) (step 7)), which were then fed into a horizontal drum type roaster (supplied with hot air) where they were medium-roasted (L value: 20.5) to obtain fermented, roasted coffee beans (sample 1).

Fermented, roasted coffee beans (sample 2) were obtained by repeating the same procedure as taken for sample 1, except for the following: 1000 g of fresh coffee cherries were provided; the vapor treatment in step 1) was performed at 100°C for 15 seconds; the microorganism used in step 3) was a lactic acid bacterium for yoghurt production (*Lactobacillus acidophilus*); the concentration of the attached lactic acid bacterium was 1.0 x 10⁷⁻⁸ cells per coffee cherry; and no adipic acid was used.

Fermented, roasted coffee beans (sample 3) were obtained by repeating the above procedure, except that the lactic acid bacterium for yoghurt production was replaced by a fungus for *shochu* production (*Aspergillus kawachii*) and that the concentration of the attached fungus was 1.0 x 10³⁻⁴ cells per coffee cherry.

Each sample of the fermented, roasted coffee beans was not ground but put as such (assuming their initial shape) into a gas chromatographic (GC) sample tube in an amount of 10 g, and the gas in the headspace was analyzed for its components. As it turned out, samples 1, 2 and 3 contained ethyl acetate in respective amounts of 65 ppm, 63 ppm and 68 ppm, and ethanol in respective amounts of 3100 ppm, 3200 ppm, and 630 ppm.

The conditions for GC analysis were as follows.

### (GC analysis conditions)

- Apparatus: Agilent 7694 HeadspaceSampler (product of Agilent Technologies) Agilent 6890 GC System (product of Agilent Technologies)
- Column: HP-INNOWAX (60 mm x 0.25 mm i.d. x 0.25 µm in film thickness)
- Temperature: held at 40°C for 4 min, raised at 3°C/min up to 220°C, and held at 230°C for 30 min
- Detectors: MSD, FID

### Example 2. Production of Fermented Coffee Beans (1)

In Guatemala, wash polishing is usually applied to obtain green coffee beans from coffee cherries. To be more specific, harvested coffee cherries are charged into a water tank and stripped of any impurities; thereafter, they are stripped of the pulp in a depulper and charged again into a water tank where they are stripped of the mucilage adhering to the parchment; the coffee cherries are thereafter dried either in the sun or by mechanical means and husked. This procedure is an unavoidable choice since coffee plants are cultivated on mountain slopes and there are no places where harvested coffee cherries can be spread for drying.

In contrast, in Brazil and other regions that have vast flat areas where coffee cherries can be dried in large amounts at a time and in which the harvest season is dry and there is no need to worry about rain, non-wash polishing is applied (also known as the "natural" polishing). To be more specific, harvested coffee cherries are immediately spread in patios and after being dried in the sun, they are husked with the dried pulp remaining attached; this procedure is characterized in that complex flavor, aroma and body are imparted to green coffee beans while they are dried over a long enough time.

In Example 2, however, an experiment was conducted in Guatemala to obtain green coffee beans by non-wash polishing. To be more specific, harvested coffee cherries were piled up in a thickness not exceeding a certain level (5 cm or less), with the layer being gradually made thicker (5-10 cm) as their water content decreased, and the piles of coffee cherries were turned once an hour, whereby the coffee cherries were dried to a water content of 10% or less over a period of 2 weeks, and thereafter husked to obtain green coffee beans (sample 4). Analysis of the resulting green coffee beans as in Example 1 verified that they contained ethyl acetate and ethanol. Analysis for ethyl isovalerate by the method to be described later also verified the presence of ethyl isovalerate.

### Example 3. Storage Test on Roasted Coffee Beans (1)

### 1. Sensory evaluation of roasted coffee beans

Coffee beans of Brazilian Arabica were fed into a horizontal drum type roaster (supplied with hot air) where they were medium-roasted (L value: 19.5) to obtain roasted coffee beans, to which an ethanol solution of ethyl isovalerate (product of Tokyo Chemical Industry Co., Ltd.) was added in such amounts that the content of ethyl isovalerate relative to the total quantity of the roasted coffee beans would be 10, 30, 50, 100 and 200 ppb (v/w) (the resulting mixtures are respectively referred to as the 10-ppb added sample, 30-ppb added sample, 50-ppb added sample, 100-ppb added sample, and the 200-ppb added sample). After stirring at ordinary temperature for several minutes, the respective samples were heated with stirring on a hot plate at about 100°C for about 20 minutes, and this step of heating with stirring was terminated when the roasted coffee beans weighed almost the same as they did before the addition of the ethanol solution. Each sample of the roasted coffee beans weighing 120 g was put into an aluminum pouch (product name: Lamijip AL-12) having a capacity of about 300 mL and subjected to a storage test, with the empty space kept to a minimum. The volume of the air within the aluminum pouch was about 20 mL. The storage test was conducted in a refrigerator (5°C), a 37°C thermostatic chamber, and a 55°C thermostatic chamber. As a control, a sample containing no ethyl isovalerate (non-addition sample) was subjected to the same storage test. After the storage, the pouches were opened, and the aroma from within each pouch was rated by four expert panelists on a 4-score scale as regards the presence or absence of deterioration smell (the intensity of oxidation smell), and the average of the scores was calculated.

The results are shown in Table 1. As is clear from Table 1, the control (non-addition sample) did not develop any sensible oxidation smell after storage in a refrigerator for about 20 days, but it developed oxidation smell when stored at temperatures higher than ordinary temperature. By adding ethyl isovalerate at 10 ppb (v/w) and more relative to the total quantity of the roasted coffee beans, the oxidation smell could be suppressed (masked) and it was barely sensible when ethyl isovalerate was added at 30 ppb (v/w) and more.

**[Table 1]**

| Level (No.) | Ethyl isovalerate (ppb) | 5°C x 3 wk | 37°C x 3 wk | 55°C x 1 wk |
|---|---|---|---|---|
| Non-addition sample | 0 | 0 | 2.0 | 2.5 |
| 10-ppb added sample | 10 | 0 | 0.8 | 1.4 |
| 30-ppb added sample | 30 | 0 | 0.6 | 0.9 |
| 50-ppb added sample | 50 | 0 | 0.4 | 0.7 |
| 100-ppb added sample | 100 | 0 | 0.1 | 0.2 |
| 200-ppb added sample | 200 | 0 | 0 | 0.1 |

| | | | | |
|---|---|---|---|---|
| (Scores for the rating of oxidation smell) Sensible, strong (3.0); sensible, distinct (2.0); sensible, slight (1.0); not sensible (0) | | | | |

### 2. Sensory evaluation of coffee extracts

Next, coffee extracts were obtained from the aforementioned samples of roasted coffee beans containing ethyl isovalerate and the control (non-addition sample) of roasted coffee beans, each having been stored at 5°C (for 3 weeks) and 55°C (for 1 week), and the extracts were subjected to cup testing. To make the coffee extracts, the ground coffee beans were charged into a commercial coffee mill (product name: BONMAC; Model No. BM570N) and medium-ground (with the dial on the coffee mill set to MEDIUM) and, thereafter, 65 g of boiling water was poured over 5 g of the ground coffee particles (powdered coffee) for extraction in the usual manner. The thus prepared coffee extracts were subjected to sensory evaluation (cup test) by four expert panelists. In this evaluation, a coffee extract obtained from the roasted coffee beans (non-addition sample) before storage was used as a control, and the preference over the control (as regards the aroma of coffee and the intensity of the body of coffee) was rated on a 5-score scale and the average of the scores was calculated. In addition, the intensity of the taste due to the deterioration of roasted coffee beans (deterioration smell: the intensity of oxidation smell and the astringency of aftertaste) was rated on a 4-score scale and the average of the scores was calculated.

The results of the rating of preference are shown in Table 2. When ethyl isovalerate was added at 30 ppb (v/w) and more, the aroma of coffee became stronger with the increase in its addition, with the result that the body of coffee had been imparted. In particular, the top note had a blooming aroma. After the storage at 55°C, all samples from roasted coffee beans deteriorated in both the aroma and body of coffee; however, the samples from roasted coffee beans to which ethyl isovalerate had been added at 30 ppb (v/w) and more were satisfactory from a sensory viewpoint, since they had aroma and body at least comparable to those of the non-addition sample before the storage.

**[Table 2]**

| | | Aroma of coffee | | Body of coffee | |
|---|---|---|---|---|---|
| Level (No.) | Ethyl isovalerate (ppb) | 5°C x 3 wk | 55°C x 1 wk | 5°C x 3 wk | 55°C x 1 wk |
| Non-addition sample | 0 | 0 | -1.0 | 0 | -1.0 |
| 10-ppb added sample | 10 | 0 | -0.5 | 0 | -1.0 |
| 30-ppb added sample | 30 | 0.5 | 0 | 0.5 | 0 |
| 50-ppb added sample | 50 | 1.5 | 1.0 | 1.0 | 0.5 |
| 100-ppb added sample | 100 | 1.5 | 1.0 | 1.0 | 0.5 |
| 200-ppb added sample | 200 | 2.0 | 1.5 | 1.0 | 0.5 |

| | | | | | |
|---|---|---|---|---|---|
| (Rating scores) Strong (2.0); fairly strong (1.0); no change (0); fairly weak (-1); weak (-2) | | | | | |

The results of the rating of deterioration smell are shown in Table 3, from which it is clear that as in the rating of the aroma of roasted coffee beans (Table 1), the non-addition sample of coffee extract also developed sensible deterioration smell (the oxidation smell and the astringency of aftertaste) due to the deterioration in quality; on the other hand, the sample with ethyl isovalerate added at 10 ppb (v/w) was suppressed in deterioration smell compared to the non-addition sample, and the deterioration smell of the 30-ppb (v/w) added sample was barely sensible; in particular, all panelists responded that they did not sense any deterioration smell in the 50-ppb (v/w) added sample.

However, the coffee extracts prepared from the sample of roasted coffee beans with ethyl isovalerate added at 200 ppb were not highly rated by some panelists who felt that the aroma of ethyl isovalerate interfered with the aroma of coffee. This suggested that the upper limit for the content of ethyl isovalerate was about 200 ppb.

**[Table 3]**

| | | Oxidation smell | | Astringency of aftertaste | |
|---|---|---|---|---|---|
| Level (No.) | Ethyl isovalerate (ppb) | 5°C x 3 wk | 55°C x 1 wk | 5°C x 3 wk | 55°C x 1 wk |
| Non-addition sample | 0 | 0 | 2.3 | 0 | 2.5 |
| 10-ppb added sample | 10 | 0 | 1.5 | 0 | 2.0 |
| 30-ppb added sample | 30 | 0 | 0 | 0 | 1.0 |
| 50-ppb added sample | 50 | 0 | 0 | 0 | 0 |
| 100-ppb added sample | 100 | 0 | 0 | 0 | 0 |
| 200-ppb added sample | 200 | 0 | 0 | 0 | 0 |

| | | | | | |
|---|---|---|---|---|---|
| (Scores for the rating of oxidation smell) Sensible, strong (3.0); sensible, distinct (2.0); sensible, slight (1.0); not sensible (0) | | | | | |

### Example 4. Storage Test on Roasted Coffee Beans (2)

### 1. Sensory evaluation of roasted coffee beans

Coffee beans of Brazilian Arabica were fed into a horizontal drum type roaster (supplied with hot air) where they were medium-roasted (L value: 20.0) to obtain roasted coffee beans, in which the fermented, roasted coffee beans produced (as sample 1) in Example 1 were incorporated in such amounts that their content relative to the total quantity of the coffee beans would be 1, 5 and 30wt% (the resulting mixtures are respectively referred to as the 1% blended sample, 5% blended sample, and the 30% blended sample). Each sample of the roasted coffee beans containing the fermented, roasted coffee beans and weighing 120 g was put into an aluminum pouch (product name: Lamijip AL-12) having a capacity of about 300 mL, and subjected to a storage test, with the empty space kept to a minimum. The volume of the air within the aluminum pouch was about 20 mL. The storage test was conducted in a refrigerator (5°C), a 37°C thermostatic chamber, and a 55°C thermostatic chamber. As a control, a sample incorporating no fermented, roasted coffee beans (non-addition sample) was subjected to the same storage test.

The ethyl isovalerate in the coffee beans was detected by the following method. First, green coffee beans (5 g) were ground to a medium grind, to which distilled water (50 mL) was added for steam distillation; the resulting distillate (100 mL) was put into a separating funnel, and after adding sodium chloride (25 g) and diethyl ether (50 mL), the separating funnel was shaken for 20 minutes. The diethyl ether layer was recovered and the remaining aqueous layer was put into the separating funnel; after adding diethyl ether (50 mL) again, the separating funnel was shaken for 20 minutes, and the diethyl ether layer was recovered. The diethyl ether layer obtained in a total of 100 mL was returned to the separating funnel; after rinsing the separating funnel with distilled water (50 mL), the diethyl ether layer was recovered, and sodium sulfate (30 g) was added; the mixture was dehydrated and concentrated to 1 mL by the KD (Kuderna-Danish) concentration method; the concentrate was introduced into GC-MS.

The GC-MS conditions were as follows.

### (GC-MS conditions)

- Apparatus: 6890N (GC) + 5973inert (MS), product of Agilent
- Column: MACH HP-INNOWAX (10 m*0.20 mm*0.20 µm), product of GERSTEL
- Column temperature: 40°C (3 min) ~ 50°C/min ~ 250°C (10 min)
- Carrier gas: He
- Injection port temperature: 250°C
- Transfer line: 250°C
- Ionization source temperature: 230°C
- Scan parameter, m/z = 35 ~ 350
- SIM parameter : m/z = 70, 88, 102

The content of ethyl isovalerate in the 1% blended sample, 5% blended sample and the 30% blended sample was 6.5, 39 and 152 ppb (v/w), respectively, relative to the total quantity of the coffee beans. After the storage, the pouches were opened and the aroma from within each pouch was evaluated by four expert panelists on a 4-score scale as regards the presence or absence of deterioration smell (the intensity of oxidation smell) due to the storage, and the average of the scores was calculated.

The results are shown in Table 4. As is clear from Table 4, the control (non-addition sample) did not develop any sensible oxidation smell after storage in a refrigerator for about 20 days, but it developed oxidation smell when stored at temperatures higher than ordinary temperature. By incorporating the fermented, roasted coffee beans at 1 wt% and more, the oxidation smell could be suppressed (masked), and it was barely sensible when the fermented, roasted coffee beans were incorporated at 5 wt%; particularly in the case where they were incorporated at 30 wt% and more, all panelists responded that they did not sense any oxidation smell. From these results, it was found that by incorporating the fermented, roasted coffee beans in such amounts that ethyl isovalerate would be contained at 10 ppb (v/w) and more, the oxidation smell of roasted coffee beans could be suppressed (masked), and that the oxidation smell was barely sensible when the fermented, roasted coffee beans were incorporated to give an ethyl isovalerate content of 30 ppb (v/w) and more.

**[Table 4]**

| | Storage conditions | | |
|---|---|---|---|
| | 5°C x 20 days | 37°C x 20 days | 55°C x 6 days |
| Non-addition sample | 0 | 2.0 | 2.5 |
| 1%-blended sample | 0 | 1.6 | 1.5 |
| 5%-blended sample | 0 | 0.6 | 0.5 |
| 30%-blended sample | 0 | 0 | 0 |

| | | | |
|---|---|---|---|
| (Scores for the rating of oxidation smell) Sensible, strong (3.0); sensible, distinct (2.0); sensible, slight (1.0); not sensible (0) | | | |

### 2. Sensory evaluation of coffee extracts

Next, coffee extracts were obtained from the aforementioned samples of roasted coffee beans containing fermented, roasted coffee beans (containing ethyl isovalerate) and the control (non-addition sample) of roasted coffee beans, each having been stored at 5°C and 55°C (6 days of storage), and the extracts were subjected to cup testing. To make the coffee extracts, the ground coffee beans were charged into a commercial coffee mill (product name: BONMAC; Model No. BM570N) and medium-ground (with the dial on the coffee mill set to MEDIUM) and, thereafter, 65 g of boiling water was poured over 5 g of the ground coffee particles (powdered coffee) for extraction in the usual manner. The thus prepared coffee extracts were subjected to sensory evaluation (cup test) by four expert panelists. In this evaluation, a coffee extract obtained from the roasted coffee beans (non-addition sample) before storage was used as a control, and the preference over the control (as regards the aroma of coffee and the intensity of the body of coffee) was rated on a 5-score scale, and the average of the scores was calculated. In addition, the intensity of the taste due to the deterioration of roasted coffee beans (deterioration smell: the intensity of oxidation smell and the astringency of aftertaste) was rated on a 4-score scale, and the average of the scores was calculated.

The results of the rating of preference are shown in Table 5. When the fermented, roasted coffee beans were incorporated at 5 wt% and more, the aroma of coffee became stronger with the increase in their addition, with the result that the body of coffee had been imparted. In particular, the top note had a blooming aroma. After the storage at 55°C, all samples from roasted coffee beans deteriorated in both the aroma and body of coffee; however, the samples from roasted coffee beans in which the fermented, roasted coffee beans had been incorporated at 5 wt% and more were satisfactory from a sensory viewpoint since they had aroma and body at least comparable to those of the non-addition sample before the storage.

**[Table 5]**

| | Aroma of coffee | | Body of coffee | |
|---|---|---|---|---|
| | 5°C x 6 days | 55°C x 6 days | 5°C x 6 days | 55°C x 6 days |
| Non-addition sample | 0 | -1.0 | 0 | -1.0 |
| 1%-blended sample | 0 | -1.0 | 0 | -1.0 |
| 5%-blended sample | 1 | 0.5 | 1 | 0.5 |
| 30%-blended sample | 2 | 1.0 | 2 | 1.0 |

| | | | | |
|---|---|---|---|---|
| (Rating scores) Strong (2.0); fairly strong (1.0); no change (0); fairly weak (-1); weak (-2) | | | | |

The results of the rating of deterioration smell are shown in Table 6, from which it is clear that as in the rating of the aroma of roasted coffee beans (Table 4), the non-addition sample (control) of coffee extract also developed sensible deterioration smell (the oxidation smell and the astringency of aftertaste) due to the deterioration in quality; on the other hand, the 1%-blended sample was suppressed in deterioration smell compared to the non-addition sample, and the deterioration smell of the 5%-blended sample was barely sensible; in particular, all panelists responded that they did not sense any deterioration smell in the 30%-blended sample.

**[Table 6]**

| | Oxidation smell | | Astringency of aftertaste | |
|---|---|---|---|---|
| | 5°C x 6 days | 55°C x 6 days | 5°C x 6 days | 55°C x 6 days |
| Non-addition sample | 0 | 2.3 | 0 | 2.5 |
| 1 %-blended sample | 0 | 1.5 | 0 | 1.8 |
| 5%-blended sample | 0 | 0.5 | 0 | 0.5 |
| 30%-blended sample | 0 | 0.0 | 0 | 0.0 |

| | | | | |
|---|---|---|---|---|
| (Scores for the rating of oxidation smell) Sensible, strong (3.0); sensible, distinct (2.0); sensible, slight (1.0); not sensible (0) | | | | |

From the above results, one can see that in order to suppress the development of oxidation smell during prolonged storage of roasted coffee beans, it is effective to incorporate the fermented, roasted coffee beans at 1 wt% and more so that ethyl isovalerate will be contained at 10 ppb and more, and it is preferable to incorporate the fermented, roasted coffee beans at 5 wt% and more so that ethyl isovalerate will be contained at 30 ppb and more.

### Example 5. Storage Test on Roasted Coffee Beans (3)

The fermented, roasted coffee beans produced (as sample 4) in Example 2 were incorporated in the roasted coffee beans used in Example 4, in such an amount that the content of sample 4 would be 30 wt% relative to the total quantity of the coffee beans (the content of ethyl isovalerate relative to the total quantity of the coffee beans: 10.2 ppb). The resulting blend was subjected to a storage test at 55°C as in Example 4. As a control, roasted coffee beans incorporating no fermented coffee beans (the content of ethyl isovalerate relative to the total quantity of the coffee beans: 0 ppb) were also subjected to a storage test.

After the storage, the aroma of the roasted coffee beans was evaluated and coffee extracts from them were also evaluated by cup testing, both ratings being conducted as in Example 4. The coffee beans incorporating the fermented, roasted coffee beans were markedly suppressed in oxidation smell compared to the non-addition sample of coffee beans, and the results of the cup testing showed the following: the coffee beans incorporating the fermented, roasted coffee beans enhanced the preferred flavor characteristics of coffee (i.e., aroma, body, and lingering aftertaste) and were capable of suppressing the unpleasant flavors (astringency and oxidation smell) that accompanied the deterioration upon storage; all panelists responded that they had great preference for the coffee beverage brewed from the coffee beans incorporating the fermented coffee beans.

## Claims

1. Roasted coffee beans in a container that contain ethyl isovalerate, wherein the proportion of ethyl isovalerate relative to the total quantity of the coffee beans is 10 ppb or more, and 200 ppb or less.

2. Roasted coffee beans in a container that comprise roasted coffee beans containing ethyl isovalerate, wherein the proportion of ethyl isovalerate relative to the total quantity of the coffee beans is 10 ppb or more, and 200 ppb or less.

3. The roasted coffee beans in a container as recited in claim 1 or 2, wherein the container accommodates the roasted coffee beans as they are in contact with the air.

4. The roasted coffee beans in a container as recited in any one of claims 1 to 3, wherein the roasted coffee beans containing ethyl isovalerate are fermented, roasted coffee beans that have been subjected to fermentation and roasting.

5. The roasted coffee beans in a container as recited in claim 4, wherein the proportion of the fermented, roasted coffee beans is 1 wt% or more of the total quantity of the coffee beans.

6. The roasted coffee beans in a container as recited in claim 4 or 5, wherein the proportion of the fermented, roasted coffee beans is 50 wt% or less of the total quantity of the coffee beans.

7. The roasted coffee beans in a container as recited in any one of claims 4 to 6, wherein the fermented, roasted coffee beans contain 5 ppm or more of ethyl acetate and/or 500 ppm or more of ethanol.

8. A process for producing roasted coffee beans including the step of treating roasted coffee beans such that they comprise roasted coffee beans containing ethyl isovalerate, and that the proportion of ethyl isovalerate relative to the total quantity of the coffee beans is 10 ppb or more, and 200 ppb or less.

9. A method of storing roasted coffee beans in the air, including the step of treating roasted coffee beans such that they comprise roasted coffee beans containing ethyl isovalerate, and that the proportion of ethyl isovalerate relative to the total quantity of the coffee beans is 10 ppb or more, and 200 ppb or less.

## Patentansprüche

1. Geröstete Kaffeebohnen in einem Behälter, die Ethylisovalerat enthalten, wobei der Anteil an Ethylisovalerat bezogen auf die Gesamtmenge der Kaffeebohnen 10 ppb oder mehr und 200 ppb oder weniger beträgt.

2. Geröstete Kaffeebohnen in einem Behälter, die geröstete Kaffebohnen umfassen, die Ethylisovalerat enthalten, wobei der Anteil an Ethylisovalerat bezogen auf die Gesamtmenge der Kaffeebohnen 10 ppb oder mehr und 200 ppb oder weniger beträgt.

3. Die gerösteten Kaffeebohnen in einem Behälter nach Anspruch 1 oder 2, wobei in dem Behälter die gerösteten Kaffeebohnen unter Luftkontakt aufbewahrt werden.

4. Die gerösteten Kaffeebohnen in einem Behälter nach einem der Ansprüche 1 bis 3, wobei die gerösteten Kaffeebohnen, die Ethylisovalerat enthalten, fermentierte, geröstete Kaffeebohnen sind, die Fermentation und Röstung unterzogen wurden.

5. Die gerösteten Kaffeebohnen in einem Behälter nach Anspruch 4, wobei der Anteil der fermentierten, gerösteten Kaffeebohnen 1 Gew.-% oder mehr der Gesamtmenge der Kaffeebohnen beträgt.

6. Die gerösteten Kaffeebohnen in einem Behälter nach Anspruch 4 oder 5, wobei der Anteil der fermentierten, gerösteten Kaffeebohnen 50 Gew.-% oder weniger der Gesamtmenge der Kaffeebohnen beträgt.

7. Die gerösteten Kaffeebohnen in einem Behälter, nach einem der Ansprüche 4 bis 6, wobei die fermentierten, gerösteten Kaffeebohnen 5 ppm oder mehr Ethylacetat und/oder 500 ppm oder mehr Ethanol enthalten.

8. Ein Verfahren zur Herstellung von gerösteten Kaffeebohnen, umfassend den Schritt der Behandlung von gerösteten Kaffeebohnen derart, dass sie geröstete Kaffeebohnen umfassen, die Ethylisovalerat enthalten, und dass der Anteil an Ethylisovalerat bezogen auf die Gesamtmenge der Kaffeebohnen 10 ppb oder mehr und 200 ppb oder weniger beträgt.

9. Ein Verfahren zum Lagern von gerösteten Kaffeebohnen an der Luft, umfassend den Schritt der Behandlung von gerösteten Kaffeebohnen derart, dass sie geröstete Kaffeebohnen umfassen, die Ethylisovalerat enthalten, und dass der Anteil an Ethylisovalerat bezogen auf die Gesamtmenge der Kaffeebohnen 10 ppb oder mehr und 200 ppb oder weniger beträgt.

## Revendications

1. Grains de café torréfiés dans un récipient qui contiennent de l'isovalérate d'éthyle, où la proportion d'isovalérate d'éthyle par rapport à la quantité totale des grains de café est de 10 ppb ou plus, et de 200 ppb ou moins.

2. Grains de café torréfiés dans un récipient qui comprennent des grains de café torréfiés contenant de l'isovalérate d'éthyle, où la proportion d'isovalérate d'éthyle par rapport à la quantité totale des grains de café est de 10 ppb ou plus, et de 200 ppb ou moins.

3. Grains de café torréfiés dans un récipient selon la revendication 1 ou 2, où le récipient reçoit les grains de café torréfiés lorsqu'ils sont en contact avec l'air.

4. Grains de café torréfiés dans un récipient selon l'une quelconque des revendications 1 à 3, où les grains de café torréfiés contenant de l'isovalérate d'éthyle sont des grains de café torréfiés fermentés qui ont été soumis à une fermentation et à une torréfaction.

5. Grains de café torréfiés dans un récipient selon la revendication 4, où la proportion des grains de café torréfiés fermentés est de 1 % en poids ou plus de la quantité totale des grains de café.

6. Grains de café torréfiés dans un récipient selon la revendication 4 ou 5, où la proportion des grains de café torréfiés fermentés est de 50 % en poids ou moins de la quantité totale des grains de café.

7. Grains de café torréfiés dans un récipient selon l'une quelconque des revendications 4 à 6, où les grains de café torréfiés fermentés contiennent 5 ppm ou plus d'acétate d'éthyle et/ou 500 ppm ou plus d'éthanol.

8. Procédé de production de grains de café torréfiés comprenant l'étape consistant à traiter les grains de café torréfiés de manière à ce qu'ils comprennent des grains de café torréfiés contenant de l'isovalérate d'éthyle, et à ce que la proportion d'isovalérate d'éthyle par rapport à la quantité totale des grains de café soit de 10 ppb ou plus, et de 200 ppb ou moins.

9. Procédé de stockage de grains de café torréfiés dans l'air, comprenant l'étape consistant à traiter les grains de café torréfiés de manière à ce qu'ils comprennent des grains de café torréfiés contenant de l'isovalérate d'éthyle, et à ce que la proportion d'isovalérate d'éthyle par rapport à la quantité totale des grains de café soit de 10 ppb ou plus, et de 200 ppb ou moins.
